# FASCICULE DE BREVET EUROPEEN

(11) **EP 3 994 364 B1**
(45) Date de publication et mention de la délivrance du brevet: **18.09.2024**
(21) Numéro de dépôt: 20734674.3
(22) Date de dépôt: 18.06.2020
(51) Int. Cl.: F16B 5/02, F16B 19/02, F16B 5/06

(54) **DISPOSITIF POUR POSITIONNER UNE FIXATION DANS UN PERÇAGE**
VORRICHTUNG ZUM POSITIONIEREN EINER BEFESTIGUNGSVORRICHTUNG IN EINER BOHRUNG
DEVICE FOR POSITIONING A FASTENER IN A BORE

(30) Priorité: 05.07.2019 FR 1907517
(43) Date de publication de la demande: 11.05.2022
(73) Titulaire: Ateliers LR Etanco, 78230 Le Pecq (FR)
(72) Inventeur: TOLLERET, Philippe, 95550 BESSANCOURT (FR)
(74) Mandataire: LLR
(86) Numéro de dépôt international: PCT/EP2020/066972
(87) Numéro de publication internationale: WO 2021/004756

(56) Documents cités:
- EP-A1- 0 544 376
- EP-A2- 1 876 314
- EP-B1- 0 544 376
- EP-B1- 1 876 314
- CA-A1- 3 052 141
- FR-A1- 2 895 769
- FR-B1- 2 895 769
- US-A- 5 645 282

## Description

La présente invention se rapporte au domaine de la pose de panneaux d'habillage. Elle se rapporte particulièrement à la fixation de panneaux d'habillage d'une isolation thermique ou phonique extérieure posée sur la façade d'un bâtiment. Plus généralement, elle se rapporte à la pose de panneaux sur un support susceptible d'avoir une dilatation différente de celle des panneaux.

Lorsque l'on isole un bâtiment par l'extérieur, un isolant est posé contre la façade et un habillage, généralement des panneaux d'habillage, est fixé à la façade à l'aide d'une structure support en profilés métalliques. L'isolant se trouve ainsi disposé entre les panneaux d'habillage et la façade du bâtiment. Les panneaux sont exposés aux intempéries et ont des variations de dimensions importantes ; la façade, isolée se dilate peu. On prévoit des moyens de dilatation pour chaque panneau relativement à la façade. Par exemple, un panneau peut être fixé par cinq fixations, qui peuvent être des vis ou des rivets. Une fixation principale est ajustée et les quatre autres, secondaires, sont montées avec jeu dans des trous prévus à cet effet dans le panneau. Un jeu suffisant doit être convenablement réparti autour de chacune des tiges des quatre autres fixations. Ainsi, la vis est progressivement abandonnée au profit du rivet, pour lequel des outils de centrage existent. Néanmoins, un panneau ne doit pas être pincé entre la tête d'une fixation secondaire et la structure support afin de permettre sa libre déformation, transversalement à l'axe longitudinal de la fixation, sous l'effet de la dilatation.

Le document CA 3 052 141 A1 décrit un manchon fendu amovible pour le maintien d'une vis.

Le but de l'invention est de proposer un dispositif de fixation qui permette la dilatation d'un panneau d'habillage d'une façade extérieurement isolée. Pour résoudre ce problème l'invention propose un manchon pour centrer une vis dans un alésage selon la revendication 1, ledit manchon comprenant :
- une paroi sensiblement cylindrique autour d'un axe de manchon ;
- un bourrelet, sensiblement annulaire, formé à l'extérieur de ladite paroi, à une première extrémité longitudinale de ladite paroi ; et,
- des moyens de fluage tangentiel.

Le manchon comprend avantageusement un fond s'étendant transversalement à une deuxième extrémité longitudinale opposée à la première, ce fond étant, de préférence, muni d'un trou de passage pour la vis.

La paroi comprend plusieurs portions, de préférence trois portions, des premiers moyens de fluage tangentiels comprenant, entre chaque portion et une portion voisine, une gorge longitudinale, cette gorge s'étendant de préférence sur une section longitudinale complète de ladite paroi. Chaque portion de la paroi porte au moins deux tronçons du bourrelet, des deuxièmes moyens de fluage tangentiels comprenant une échancrure longitudinale séparant chacun de ces tronçons d'un tronçon voisin sur la même portion. Un fond de chaque échancrure peut être formé par la paroi.

Le manchon peut avantageusement comprendre des soufflets s'étendant vers l'intérieur du manchon à partir de la paroi, chacun desdits soufflets formant un fond d'une gorge respective.

Avantageusement, un manchon selon l'invention est en un élastomère ayant, de préférence, une dureté shore A comprise entre 60 et 95, et, de façon encore plus préférentielle, une dureté shore A comprise entre 80 et 90.

Selon un deuxième objet, l'invention propose aussi un système de vis qui comprend une vis et un manchon selon l'invention, ce manchon comprenant des moyens de guidage longitudinal pour cette vis. Avantageusement ces moyens de guidage pour la vis, sont formés par les soufflets ensemble.

Le système peut comprendre le manchon prémonté sur une extrémité de la vis.

Plusieurs modes d'exécution de l'invention seront décrits ci-après, à titre d'exemples non limitatifs, en référence aux dessins annexés dans lesquels :
[Fig. 1] est une vue en perspective d'un dispositif de centrage selon l'invention ;
[Fig. 2] est une vue en coupe et en élévation et en perspective du dispositif de la figure 1 ;

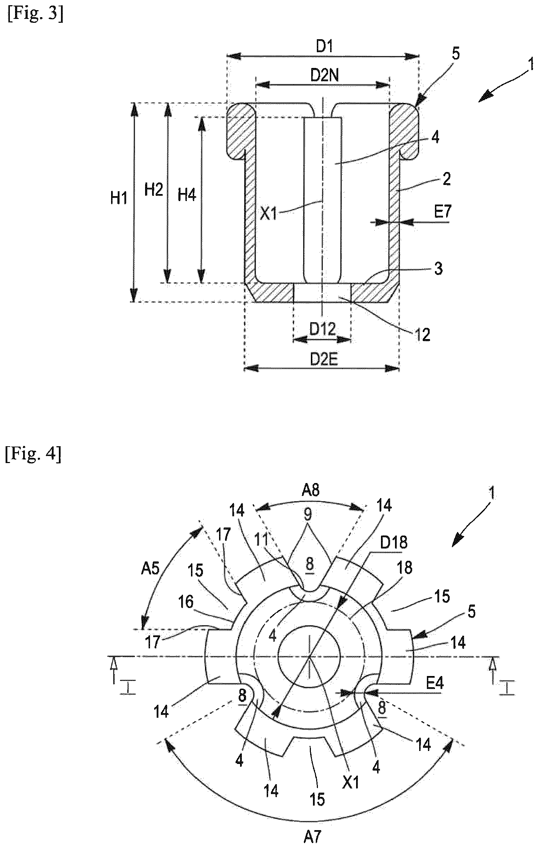

[Fig. 3] est une vue en coupe et en élévation du dispositif de la figure 1 ;
[Fig. 4] est une vue de dessus du dispositif de la figure 1 ;
[Fig. 5] est une vue en coupe partielle et en élévation d'une vis en cours de vissage utilisant le dispositif de la figure 1 pour la fixation d'un panneau sur un support et une comparaison dimensionnelle de la vis et du dispositif de centrage ; et,
[Fig. 6] illustre une position de fixation, similaire à celle de la figure 5, dans laquelle le dispositif de centrage est axialement comprimé.

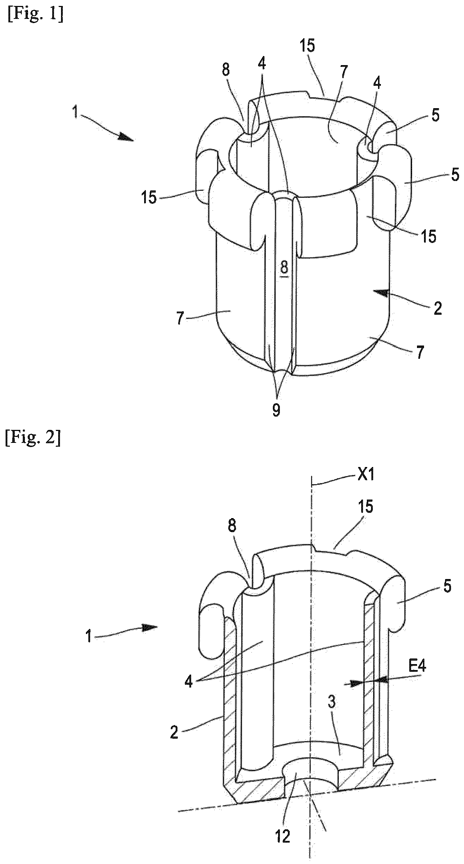

Les termes dessus, dessous, notamment, doivent être compris dans la position d'usage de la figure 1, ils ne sont pas limitatifs.

La figure 1 représente isolément un dispositif de centrage selon l'invention, en forme de manchon 1. Dans l'exemple illustré, le manchon 1 est formé d'une seule pièce, en élastomère. Il est sensiblement de révolution autour d'un axe longitudinal X 1. Il comprend :
- une paroi 2 cylindrique autour de l'axe longitudinal ;
- un fond 3 ;
- des soufflets 4 ; et,
- un bourrelet 5.

La paroi 2 s'étend longitudinalement depuis le fond 3. Elle est composée de trois portions 7 régulièrement réparties autour de l'axe longitudinal X1, de sorte que les portions sont superposables l'une à l'autre par une rotation d'un angle A7 de cent vingt degrés autour de cet axe. Chaque portion 7 a une épaisseur radiale E7 sensiblement constante sur toute la hauteur H2 de la paroi 2. La hauteur H2 est mesurée intérieurement, depuis le fond 3.

Chaque portion 7 est séparée d'une portion 7 voisine par une gorge 8 s'étendant sur toute la hauteur H2 et toute l'épaisseur E7 de la paroi 2. Les parois longitudinales de chaque gorge 8 sont les faces longitudinales 9 des portions 7 de paroi qui l'encadrent. Ces faces 9 donnent à la gorge 8 une section transversale en forme de « V », ouverte côté extérieur au manchon 1 et fermée côté intérieur par un soufflet 4. Les branches du « V » ainsi formé font un angle A8 entre elles.

Chaque soufflet 4 forme le fond d'une gorge 8 respective. Il a une hauteur H4 inférieure à la hauteur H2 de la paroi 2. La hauteur H4 est mesurée intérieurement, depuis le fond 3. Le soufflet a une section transversale sensiblement constante sur sa hauteur H4. Il a une surface intérieure 11 qui relie entre elles les surfaces longitudinales de la gorge 8. Cette surface extérieure 11 du soufflet prolonge tangentiellement chacune des surfaces longitudinales 9 de la gorge. Cette surface 11 est cylindrique autour d'un axe longitudinal, intérieur à la gorge. Le soufflet a une épaisseur transversale E4 constante, mesurée vers l'intérieur du manchon 1, perpendiculairement à la surface extérieure 11.

Le fond 3 est percé d'un alésage axial 12.

Le bourrelet 5 a une forme annulaire. Il est formé à l'extrémité libre de la paroi 2, opposée au fond 3. Chaque portion 7 de paroi 2 porte une paire de tronçons 14 de bourrelet 5. Une échancrure 15 est formée entre les deux tronçons 14 de chaque paire. Les deux tronçons d'une même paire forme entre eux une échancrure dont la section transversale est en forme de « U ». La base 16 du « U » est formée par la paroi 2 ; chaque branche du « U » est formée par une face longitudinale interne 17 d'un tronçon 14 respectif, en vis-à-vis de l'autre tronçon 14 de la même paire. Les deux faces internes 17 forment entre elles un angle A5.

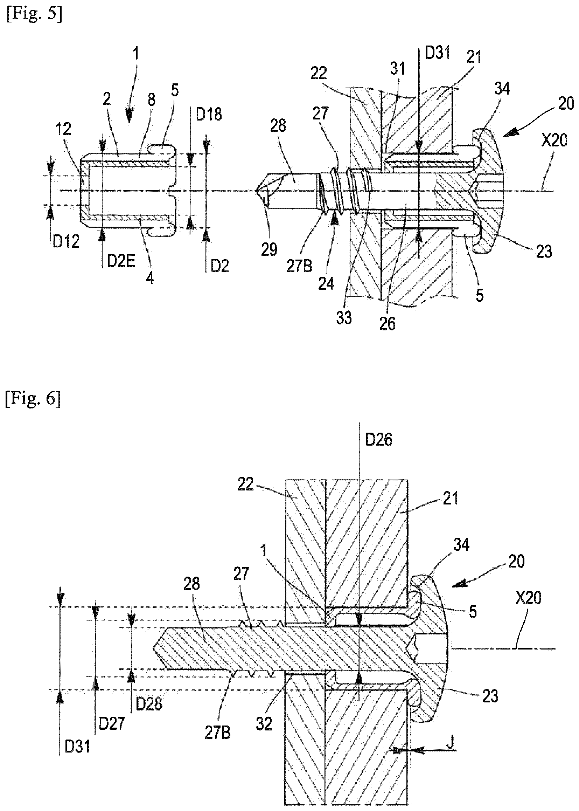

On va maintenant décrire une utilisation du manchon 1 en référence aux figures 5 et 6.

Comme illustré dans la partie droite de la figure 5, le manchon 1 est utilisé pour poser une vis 20. Dans l'exemple illustré, la vis 20 permet de fixer un panneau d'habillage 21 à un profilé métallique 22 ; le panneau et l'élément ne sont que partiellement représentés. Le profilé, par exemple une équerre, permet de relier le panneau à la façade, non représentée, d'un bâtiment.

La vis comprend une tête 23 et une tige 24. La tige comprend une partie sous tête 26 lisse prolongée par une partie filetée 27 et auto-taraudeuse, terminée par une deuxième partie lisse 28 et une pointe auto-foreuse 29.

Un trou de fixation 31 est pré-percé dans le panneau 21. Il est d'un diamètre D31 supérieur au diamètre D26 de la partie lisse sous tête 26 de la vis 20, de façon à permettre un déplacement du panneau, sous l'effet de la dilatation, transversalement à l'axe X20 de la vis 2. Le diamètre extérieur D2E de la paroi 2 est sensiblement identique au diamètre D31 du trou de fixation 31, de sorte que le manchon 1 vient s'insérer de façon sensiblement ajustée dans le trou 31.

Le trou de passage 12, dans le fond du manchon à un diamètre D12 inférieur ou sensiblement égal au diamètre D28 de la deuxième partie lisse, de sorte qu'il permet d'y centrer la pointe de la vis. En outre, le trou 12 permet le pré-montage du manchon 1 sur la tige 24 de la vis 20.

Le cylindre théorique 18 d'axe X1 inscrit entre les soufflets 4 a un diamètre D18 inférieur ou voisin du diamètre X27 extérieur du filetage 27B, de sorte qu'il permet de maintenir l'axe X20 de la vis 20 sensiblement coaxial avec l'axe X1 du manchon 1. Le diamètre D18 du cylindre inscrit 18 est inférieur à un diamètre intérieur D2N de la paroi 2.

Lorsque la vis 20 est vissée, elle vient forer un perçage 32 dans le profilé métallique 22. Les dimensions longitudinales de la vis sont choisies de sorte que lorsque le vissage est complet, le filetage 27B s'étend en totalité au-delà du profilé 22. En outre, l'extrémité du filetage côté tête forme un arrêt droit 33 qui sert de butée anti-retour, empêchant le dévissage de la vis 20. L'arrêt droit augmente en outre la résistance à l'arrache de la vis de son support, le profilé 22.

La vis 20 comprend en outre un évidement sous tête 34 annulaire, prévu pour y loger le bourrelet 5. Comme illustré à la figure 6, le bourrelet 5, en s'écrasant entre la tête de vis 23 et le panneau 21, absorbe les tolérances de fabrication de la vis 30, du panneau 21, du profilé 22 et du manchon 1, tout en maintenant un jeu J suffisant entre la tête 23 et le panneau 21. Le jeu J permet un déplacement latéral du panneau 21 relativement à la vis 20 tout en maintenant le panneau 21 plaqué contre le profilé 22.

Lorsque le panneau se dilate, transversalement aux axes X1, X20 de la vis et du manchon, les gorges 8 permettent un fluage tangentiel des portions 7 de la paroi 2 dans le trou de fixation 31, les échancrures 15 permettent un fluage tangentiel des tronçons 14 du bourrelet 5 dans l'évidement 34, et, l'évidement 34 permet de masquer et de contenir un fluage transversal du bourrelet 5.

Le manchon 1 permet ainsi le centrage de la vis 20 dans le trou de fixation 31 et une dilatation sans jeu du panneau 21, transversalement à la vis 20.

A titre d'exemple, les dimensions d'un système tel que décrit sont :
A5 = 60 degrés d'angle environ
A7 = 120 degrés d'angle environ
A8 = 60 degrés d'angle environ
A = 60 degrés d'angle environ
D1 = 10 mm environ
D2E = 8 mm environ
D2N = 7 mm environ
D12 = 3 mm environ
D18 = 5,3 mm environ
D26 = 4,2 mm environ
D27 = 5,5 mm environ
D28 = 4 mm environ
D31 = 8 mm environ
E4 = 0,5 mm environ
H1 = 10,5 mm environ
H2 = 9,5 mm environ
H4 = 8,75 mm environ

La dureté « shore A » de l'élastomère constituant le manchon est de préférence choisie supérieure ou égale 60 et inférieure ou égale à 95. Dans l'exemple illustré, cette dureté est choisie voisine de 90.

Bien sûr, l'invention n'est pas limitée aux exemples qui viennent d'être décrits. Au contraire, l'invention est définie par les revendications qui suivent.

Il apparaîtra en effet à l'homme de l'art que diverses modifications peuvent être apportées aux modes de réalisation décrits ci-dessus, à la lumière de l'enseignement qui vient de lui être divulgué.

Ainsi, le nombre de portions de paroi et/ou de tronçons de bourrelet peuvent varier.

Aussi, le manchon peut ne pas comprendre de fond, les soufflets assurant une liaison entre les portions de paroi.

## Revendications

1. Manchon (1) pour centrer une vis (20) dans un alésage (31), ce manchon comprenant :
- une paroi (2) sensiblement cylindrique autour d'un axe de manchon (X1) ;
- un bourrelet (5), sensiblement annulaire, formé à l'extérieur de ladite paroi (2), à une première extrémité longitudinale de ladite paroi ; et,
- des moyens de fluage tangentiel (8, 15) ;
la paroi (2) comprenant plusieurs portions (7), de préférence trois portions,
des premiers moyens de fluage tangentiels (8) comprenant, entre chaque portion et une portion voisine, une gorge longitudinale (8), ladite gorge s'étendant de préférence sur une section longitudinale (9) complète de ladite paroi,
**caractérisé en ce que**
chaque portion (7) porte au moins deux tronçons (14) du bourrelet (5), des deuxièmes moyens de fluage tangentiels (15) comprenant une échancrure longitudinale (15) séparant chacun desdits tronçons d'un tronçon voisin sur la même portion (7).

2. Manchon (1) selon la revendication 1, **caractérisé en ce qu'**il comprend un fond (3) s'étendant transversalement à une deuxième extrémité longitudinale opposée à la première, ledit fond étant, de préférence, muni d'un trou de passage (12) pour la vis (20).

3. Manchon (1) selon la revendication 1 ou 2, **caractérisé en ce que** la paroi (2) forme un fond de chaque échancrure (15).

4. Manchon (1) selon l'une des revendications 1 à 3, **caractérisé en ce qu'**il comprend des soufflets (4) s'étendant vers l'intérieur du manchon à partir de la paroi (2), chacun desdits soufflets formant un fond d'une gorge (8) respective.

5. Manchon selon l'une des revendications 1 à 4, **caractérisé en ce qu'**il est en un élastomère ayant, de préférence, une dureté shore A comprise entre 60 et 95, encore plus de préférence comprise entre 80 et 90.

6. Système de vis, **caractérisé en ce qu'**il comprend une vis (20) et un manchon (1) selon l'une des revendications 1 à 5, ledit manchon comprenant des moyens de guidage (4) longitudinal pour ladite vis.

7. Système de vis selon la revendication 6, **caractérisé en ce qu'**il comprend un manchon selon la revendication 4, les soufflets formant ensemble des moyens (4) de guidage (D18) pour la vis.

8. Système selon l'une des revendications 6 et 7, **caractérisé en ce que** le manchon est prémonté sur une extrémité de la vis.

## Patentansprüche

1. Hülse (1) zum Zentrieren einer Schraube (20) in einer Bohrung (31), wobei diese Hülse aufweist:
- eine im Wesentlichen zylindrische Wandung (2) um eine Hülsenachse (X1) herum;
- einen im Wesentlichen ringförmigen Wulst (5), der außerhalb der Wandung (2) an einem ersten Längsende der Wand gebildet ist; und
- tangentiale Kriechmittel (8, 15);
wobei die Wandung mehrere Teile (7), bevorzugt drei Teile, aufweist,
wobei erste tangentiale Kriechmittel (8) zwischen jedem Teil und einem benachbarten Teil eine Längskehlung (8) aufweisen, wobei die Kehlung sich bevorzugt über einen vollständigen Längsschnitt (9) der Wandung erstreckt,
**dadurch gekennzeichnet, dass**
jeder Teil (7) wenigstens zwei Abschnitte (14) des Wulstes (5) trägt, wobei zweite tangentiale Kriechmittel (15) einen Längsschlitz (15) aufweisen, der jeden der Abschnitte von einem benachbarten Abschnitt auf dem gleichen Teil (7) trennt.

2. Hülse (1) nach Anspruch 1, **dadurch gekennzeichnet, dass** sie einen Boden (7) aufweist, der sich quer zu einem zweiten Längsende, das dem ersten gegenüberliegt, erstreckt, wobei der Boden, bevorzugt, mit einem Durchtrittsloch (12) für die Schraube (20) versehen ist.

3. Hülse (1) nach Anspruch 1 oder 2, **dadurch gekennzeichnet, dass** die Wandung (2) einen Boden jedes Schlitzes (15) bildet.

4. Hülse (1) nach einem der Ansprüche 1 bis 3, **dadurch gekennzeichnet, dass** sie Balge (4) aufweist, die sich in das Innere der Hülse von der Wandung (2) aus erstrecken, wobei jeder der Balge einen Boden einer jeweiligen Kehlung (8) bilden.

5. Hülse nach einem der Ansprüche 1 bis 4, **dadurch gekennzeichnet, dass** sie aus einem Elastomer ist, der, bevorzugt eine Shore-Härte A aufweist, die zwischen 60 und 95 beträgt, weiter bevorzugt zwischen 80 und 90 beträgt.

6. Schraubensystem, **dadurch gekennzeichnet, dass** es eine Schraube (20) und eine Hülse (1) nach einem der Ansprüche 1 bis 5 aufweist, wobei die Hülse Längsführungsmittel (4) für die Schraube aufweist.

7. Schraubensystem nach Anspruch 6, **dadurch gekennzeichnet, dass** es eine Hülse nach Anspruch 4 aufweist, wobei die Balge gemeinsam Mittel (4) für die Führung (D18) für die Schraube bilden.

8. System nach einem der Ansprüche 6 und 7, **dadurch gekennzeichnet, dass** die Hülse auf einem Ende der Schraube vormontiert ist.

## Claims

1. Sleeve (1) for centring a screw (20) in a bore (31), this sleeve comprising:
- a wall (2) that is substantially cylindrical about a sleeve axis (X1);
- a bulge (5), which is substantially annular, formed on the outside of said wall (2), at a first longitudinal end of said wall; and,
- tangential creep means (8, 15);
the wall (2) comprising a plurality of portions (7), preferably three portions,
first tangential creep means (8) comprising, between each portion and a neighbouring portion, a longitudinal groove (8), said groove preferably extending over a complete longitudinal section (9) of said wall,
**characterized in that**
each portion (7) bears at least two segments (14) of the bulge (5), second tangential creep means (15) comprising a longitudinal notch (15) separating each of said segments from a neighbouring segment on the same portion (7) .

2. Sleeve (1) according to Claim 1, **characterized in that** it comprises a bottom (3) extending transversely to a second longitudinal end opposite the first, said bottom preferably being provided with a passage hole (12) for the screw (20).

3. Sleeve (1) according to Claim 1 or 2, **characterized in that** the wall (2) forms a bottom of each notch (15).

4. Sleeve (1) according to one of Claims 1 to 3, **characterized in that** it comprises gussets (4) extending towards the inside of the sleeve from the wall (2), each of said gussets forming a bottom of a respective groove (8) .

5. Sleeve according to one of Claims 1 to 4, **characterized in that** it is made of an elastomer that preferably has a Shore A hardness of between 60 and 95, even more preferably of between 80 and 90.

6. Screw system, **characterized in that** it comprises a screw (20) and a sleeve (1) according to one of Claims 1 to 5, said sleeve comprising longitudinal guiding means (4) for said screw.

7. Screw system according to Claim 6, **characterized in that** it comprises a sleeve according to Claim 4, the gussets together forming guiding means (4) (D18) for the screw.

8. System according to either of Claims 6 and 7, **characterized in that** the sleeve is pre-mounted on an end of the screw.
